# EUROPEAN PATENT APPLICATION

(11) **EP 4 607 244 A1**
(43) Date of publication of application: **27.08.2025**
(21) Application number: 23879203.0
(22) Date of filing: 20.10.2023
(51) Int. Cl.: G01S 15/931, G01S 15/04

(54) **OBJECT DETECTION METHOD, OBJECT DETECTION DEVICE, AND MOTOR VEHICLE**

(30) Priority: 21.10.2022 CN 202211300042
(71) Applicant: Valeo Interior Controls (Shenzhen) Co., Ltd., Shenzhen, Guangdong 518128 (CN)
(72) Inventor: ZHAO, Hui, Shenzhen, Guangdong 518128 (CN); SHANG, Lang, Shenzhen, Guangdong 518128 (CN)
(74) Representative: Pothmann, Karsten
(86) International application number: PCT/CN2023/125614
(87) International publication number: WO 2024/083217

(57) **Abstract**

The present disclosure provides an object detection method, which can provide information about the distance of a detected object by means of the relationship between the distance of the detected object in a close-range area/blind zone and the dispersion of a reverberation duration when the detected object is too close to an ultrasonic sensing system and is within the blind zone of the ultrasonic sensing system, overcomes the technical prejudice of being unable to provide specific location information of the detected object when the detected object is located within the blind zone of the ultrasonic sensing system, and is particularly applicable to close-range detection in the field of motor vehicles. In addition, the present disclosure further provides a computer program product, an object detection device, and a motor vehicle, which can also provide information about the distance of a detected object when the detected object is in a close-range area/blind zone.

## Description

### Technical Field

The present disclosure relates to the field of motor vehicles, in particular to an object detection method, an object detection device and a motor vehicle.

### Background Art

As demand for motor vehicle advanced driver assistance (ADAS) and autonomous driving rises significantly and the associated technology is widely applied, an ever growing number of driver assistance systems (e.g. assisted parking systems, automatic parking systems, wade detection systems, systems for monitoring people inside vehicles, etc.) are being widely used in motor vehicles. Ultrasonic sensors are based on simple principles, and are able to realize functions such as ultrasonic measurement of distance and speed with only a small amount of computation, by making use of the time-of-flight (TOF) method or the Doppler effect, etc., and are especially suitable for use in low speed maneuvering systems, such as assisted parking systems, of motor vehicles.

As stated above, the time-of-flight (TOF) method is typically used for ultrasonic distance measurement. Specifically, the ultrasonic sensor transmits a transmitted wave in response to a drive signal, the transmitted wave contacts the object under measurement and reflects a reflected wave, and the round trip distance to the object under measurement can be calculated by measuring the time from the start of transmission to reception of the reflected wave and multiplying this time by the speed of sound.

In addition, when transmission of the drive signal to the ultrasonic sensor has ceased, a vibrator of the ultrasonic sensor will continue damped vibration. Aftersound generated during this damped vibration is called reverberation. The reverberation time is defined as the time taken for an output voltage to attenuate to a standard voltage position, counted from the time when driving of the ultrasonic sensor started.

As can be seen, if the object under measurement is close to the ultrasonic sensor, a situation may occur in which the vibrator of the ultrasonic sensor is still in the midst of damped vibration when the reflected wave has returned to the ultrasonic sensor. Thus, the damped vibration which is still in progress will mix with, and be superposed on, the reflected wave which has already returned, with the result that the ultrasonic sensor is only able to detect an enhanced signal strength and a prolonged reverberation time, and unable to determine the specific point in time when the reflected wave was received. Thus, it is not possible to measure the time from the start of transmission to reception of the reflected wave, and calculate the round trip distance to the object under measurement. In other words, measurement of short distances is difficult to achieve using the TOF method.

Thus, there is a need for an object detection method, an object detection device and a motor vehicle. These measure distances ultrasonically with the aid of an ultrasonic sensor, and are able to provide information on the degree of proximity of the object under measurement when the object under measurement is very close to the ultrasonic sensor.

### Summary of the Disclosure

To address the above problem, the present disclosure proposes an object detection method, an object detection device and a motor vehicle. The object detection method, object detection device and motor vehicle according to the present disclosure are able to provide information on the degree of proximity of an object under measurement even when the object under measurement is close to the ultrasonic sensor, and are especially suitable for close-range detection in the field of motor vehicles.

In the sense of the present disclosure, the motor vehicle may be any vehicle. A preferred motor vehicle is, for example, a road vehicle or a track vehicle. Particularly preferably, the motor vehicle is a road vehicle, such as a passenger vehicle or a truck.

According to one aspect of the present disclosure, an object detection method is proposed, the method making use of an ultrasonic sensor and comprising: transmitting a transmitted wave by means of the ultrasonic sensor, and determining a reverberation duration; judging whether the determined reverberation duration is prolonged relative to a reference reverberation duration; if the reverberation duration is prolonged relative to the reference reverberation duration, transmitting multiple transmitted waves sequentially by means of the ultrasonic sensor, separately determining multiple reverberation durations corresponding to the multiple transmitted waves, and determining a degree of dispersion of the multiple reverberation durations; judging a degree of proximity to the object according to a trend of variation of the degree of dispersion of the multiple reverberation durations: judging that the object is being approached if the degree of dispersion is increasing; and judging that the object is being moved away from if the degree of dispersion is decreasing.

According to a more detailed embodiment of the object detection method of the present disclosure, the determining a degree of dispersion of the multiple reverberation durations in the object detection method further comprises: if the reverberation duration is prolonged relative to the reference reverberation duration, transmitting a first plurality of transmitted waves sequentially by means of the ultrasonic sensor at a first point in time, separately determining a first plurality of reverberation durations corresponding to the first plurality of transmitted waves, and determining a first degree of dispersion of the first plurality of reverberation durations; transmitting a second plurality of transmitted waves sequentially by means of the ultrasonic sensor at a second point in time after the first point in time, separately determining a second plurality of reverberation durations corresponding to the second plurality of transmitted waves, and determining a second degree of dispersion of the second plurality of reverberation durations; and the judging a degree of proximity to the object further comprises: judging a degree of proximity to the object according to a size relationship of the first degree of dispersion and the second degree of dispersion.

According to a more detailed embodiment of the object detection method of the present disclosure, the judging a degree of proximity to the object in the object detection method further comprises: judging that the object is being approached if the second degree of dispersion is greater than the first degree of dispersion; and judging that the object is being moved away from if the second degree of dispersion is less than the first degree of dispersion.

According to a more detailed embodiment of the object detection method of the present disclosure, the judging a degree of proximity to the object in the object detection method further comprises: judging that the object is being approached if the difference between the second degree of dispersion and the first degree of dispersion is greater than a predetermined threshold; and judging that the object is being moved away from if the difference between the second degree of dispersion and the first degree of dispersion is less than a predetermined threshold.

According to a more detailed embodiment of the object detection method of the present disclosure, the degree of dispersion of the multiple reverberation durations in the object detection method comprises the variance or standard deviation of the multiple reverberation durations.

In the object detection method according to the present disclosure, firstly, a judgment is made as to whether an object under measurement is present within a close range, i.e. within a blind zone of the ultrasonic sensor, by observing variation of reverberation times. In addition, if it is judged that an object under measurement is present within a close range, information on the degree of proximity of the object under measurement can be further provided by the object detection method according to the present disclosure, by making multiple measurements of reverberation time and determining the degree of dispersion thereof. Specifically, by means of the object detection method according to the present disclosure, it is also possible to judge whether the object under measurement is being approached or being moved away from at the present time. Thus, by means of the object detection method according to the present disclosure, more comprehensive information on the position of the object under measurement within a close range can be provided, so the method can be advantageously used in systems that are common in the field of motor vehicles, such as automatic parking systems, wade detection systems, and systems for monitoring people in vehicles.

In addition, according to a second aspect of the present disclosure, a computer program product is proposed. This comprises a computer program, wherein the computer program, when executed by a processor, causes an object detection device to perform the object detection method according to the present disclosure as described above.

The computer program product according to the present disclosure has advantages corresponding to those of the object detection method according to the present disclosure; for conciseness, details are not repeated here.

In addition, according to a third aspect of the present disclosure, an object detection device is proposed, comprising an ultrasonic sensor, a memory, a processor and computer instructions stored on the memory, wherein the instructions, when executed by the processor, cause the object detection device to perform the object detection method according to the present disclosure as described above.

The object detection device according to the present disclosure has advantages corresponding to those of the object detection method according to the present disclosure; for conciseness, details are not repeated here.

According to a fourth aspect of the present disclosure, an object detection device is proposed, comprising: an ultrasonic sensing unit; a reverberation duration determining unit, configured to determine a reverberation duration after the ultrasonic sensing unit has transmitted a transmitted wave; a close-range object presence judgment unit, configured to judge that an object is present within a close range if the reverberation duration is prolonged relative to a reference reverberation duration; and a close-range object proximity judgment unit, configured to sequentially transmit multiple transmitted waves by means of the ultrasonic sensing unit if it is judged that an object is present within a close range, separately determine multiple reverberation durations corresponding to the multiple transmitted waves, and determine a degree of dispersion of the multiple reverberation durations, wherein the close-range object proximity judgment unit is further configured to judge a degree of proximity to the object according to a trend of variation of the degree of dispersion of the multiple reverberation durations: judging that the object is being approached if the degree of dispersion is increasing; and judging that the object is being moved away from if the degree of dispersion is decreasing.

According to a more detailed embodiment of the object detection device according to the present disclosure, the close-range object proximity judgment unit is further configured to: if the reverberation duration is prolonged relative to the reference reverberation duration, transmit a first plurality of transmitted waves sequentially by means of the ultrasonic sensing unit at a first point in time, separately determine a first plurality of reverberation durations corresponding to the first plurality of transmitted waves, and determine a first degree of dispersion of the first plurality of reverberation durations; and transmit a second plurality of transmitted waves sequentially by means of the ultrasonic sensing unit at a second point in time after the first point in time, separately determine a second plurality of reverberation durations corresponding to the second plurality of transmitted waves, and determine a second degree of dispersion of the second plurality of reverberation durations; and the close-range object proximity judgment unit is further configured to: judge that the object is being approached if the second degree of dispersion is greater than the first degree of dispersion; and judge that the object is being moved away from if the second degree of dispersion is less than the first degree of dispersion.

In the object detection device according to the present disclosure, firstly, variation of reverberation times is observed by means of the reverberation duration determining unit, and a judgment is made as to whether an object under measurement is present within a close range, i.e. within a blind zone of the ultrasonic sensor, by means of the close-range object presence judgment unit. In addition, if the close-range object presence judgment unit judges that an object under measurement is present within a close range, the close-range object proximity judgment unit can make multiple measurements of reverberation time to determine the degree of dispersion thereof, and further provide information on the degree of proximity of the object under measurement, i.e. can also judge whether the object under measurement is being approached or being moved away from at the present time. Thus, the object detection device according to the present disclosure can be advantageously used in, for example, systems that are common in the field of motor vehicles, such as automatic parking systems, wade detection systems, and systems for monitoring people in vehicles, to provide more comprehensive information on the position of the object under measurement within a close range.

In addition, according to a fifth aspect of the present disclosure, a motor vehicle is proposed. The motor vehicle comprises the object detection device as described above.

The motor vehicle according to the present disclosure has advantages corresponding to those of the object detection device according to the present disclosure; for conciseness, details are not repeated here.

### Brief Description of the Drawings

To explain the technical solutions of embodiments of the present disclosure more clearly, the drawings which need to be used in describing the embodiments are described in simple terms below. Obviously, the drawings in the description below are merely some embodiments of the present disclosure, and those skilled in the art could obtain other drawings based on these drawings without expending inventive effort. The drawings below are not scaled drawings according to actual dimensions but rather focus on showing the main purpose of the present disclosure.
Fig. 1 shows a flow chart of an object detection method 100 according to embodiments of the present disclosure.
Fig. 2 shows a line graph of average reverberation time against the distance from an object under measurement to an ultrasonic sensing system.
Fig. 3A shows a line graph of reverberation time variance against the distance from an object under measurement (a wall) to an ultrasonic sensing system.
Fig. 3B shows a line graph of reverberation time variance against the distance from an object under measurement (a pedestrian) to an ultrasonic sensing system.
Fig. 4 shows a flow chart of a more detailed embodiment of the object detection method 100 according to the present disclosure.
Fig. 5 shows a schematic block diagram of an object detection device 500 according to embodiments of the present disclosure.
Fig. 6 shows a schematic block diagram of an object detection device 600 according to embodiments of the present disclosure.
Fig. 7 shows a motor vehicle 700 according to embodiments of the present disclosure.

### Detailed Description of Embodiments

The technical solution in embodiments of the present disclosure will be described clearly and completely below with reference to the drawings. Obviously, the embodiments described are merely some, not all, of the embodiments of the present disclosure. All other embodiments obtained by those skilled in the art based on embodiments of the present disclosure without inventive effort shall also fall within the scope of protection of the present disclosure.

As indicated in the present disclosure and claims, unless expressly specified otherwise in the context, words such as "a", "one", "one type", and/or "said" do not specifically mean the singular, but may also include the plural. Generally, the terms "comprise" and "include" only indicate the inclusion of expressly identified steps and elements, but these steps and elements do not constitute an exclusive list, and a method or device may also include other steps or elements.

In addition, in this Description and the drawings, the terms "first/second" are merely used to distinguish between similar objects and do not represent a specific sorting of the objects. It will be understood that if permitted, "first/second" may be exchanged for a specific order or sequence, to enable embodiments of the present disclosure described herein to be implemented in a different order from that illustrated or described herein.

In addition, in this Description and the drawings, if a flowchart is used to describe steps of the method according to embodiments of the present disclosure, it should be understood that a previous or following step is not necessarily performed precisely in order. Conversely, various steps may be processed in reverse order or at the same time, unless explicitly defined in embodiments of the present disclosure. Moreover, other operations may be added to these processes, or one or more steps may be removed from these processes.

As stated above, when the time-of-flight (TOF) method is used for ultrasonic distance measurement in an ultrasonic sensing system (e.g. an assisted parking system, an automatic parking system, a wade detection system, a system for monitoring people in vehicles, etc.), if the object under measurement is too close to the ultrasonic sensing system, i.e. if the object under measurement is located within a blind zone of the ultrasonic sensing system, the specific point in time when the reflected wave is received cannot be determined due to the reverberation effect. In other words, if the object under measurement is too close to the ultrasonic sensing system and thus located within the blind zone of the ultrasonic sensing system, close-range detection will be difficult to achieve using the TOF method.

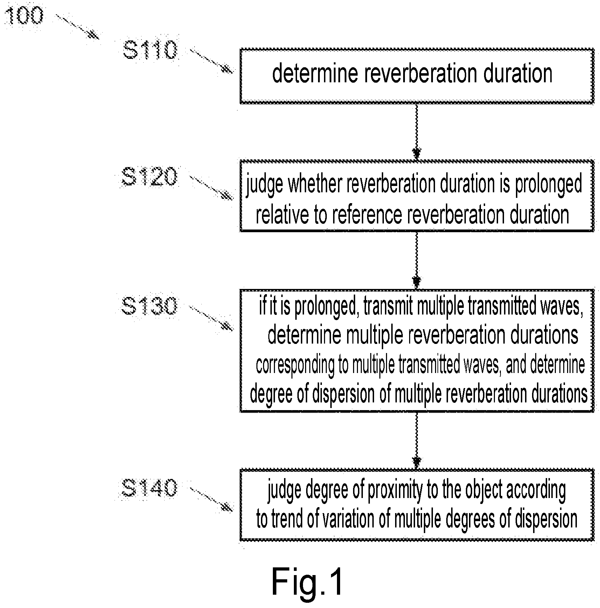

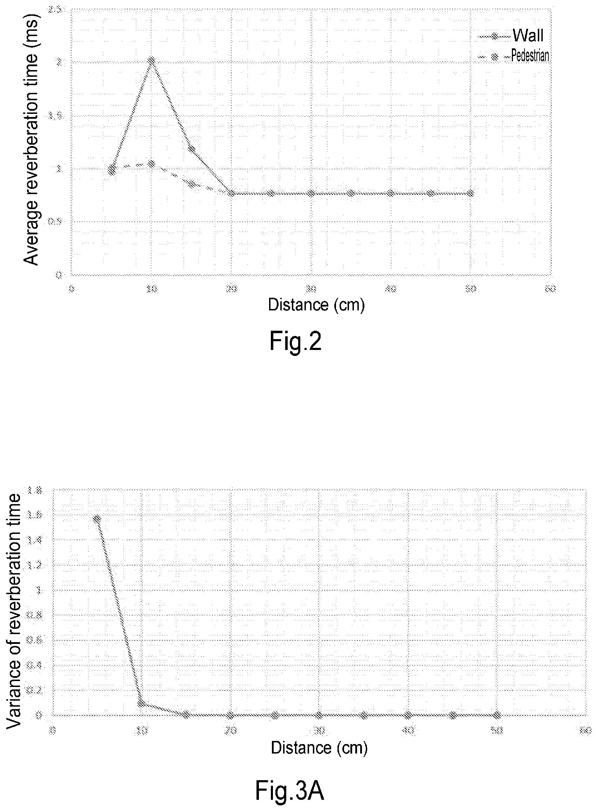

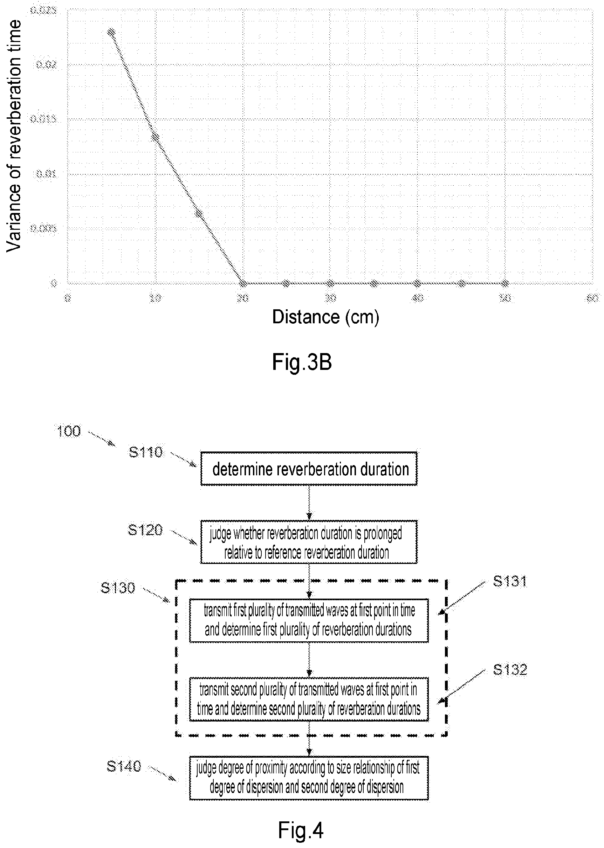

On this basis, according to one aspect of the present disclosure, an object detection method is proposed. The object detection method is able to provide information on the degree of proximity of an object under measurement, even if the object under measurement is too close to the ultrasonic sensing system and thus located within the blind zone of the ultrasonic sensing system. Fig. 1 shows a flow chart of an object detection method 100 according to embodiments of the present disclosure. Fig. 2 shows experimentally a line graph of average reverberation time against the distance from an object under measurement to an ultrasonic sensing system, when the object detection method 100 according to embodiments of the present disclosure is implemented. Figs. 3A and 3B show experimentally line graphs of reverberation time variance against the distance from an object under measurement to an ultrasonic sensing system, when the object detection method 100 according to embodiments of the present disclosure is implemented. For clarity, the object detection method 100 according to embodiments of the present disclosure is expounded below with reference to Figs. 1, 2, 3A and 3B.

The ultrasonic sensing system that implements the object detection method 100 according to embodiments of the present disclosure may be any system in the field of motor vehicles that needs to use an ultrasonic sensor for ultrasonic distance measurement. As an example, the ultrasonic sensing system that implements the object detection method 100 may comprise an assisted parking system, an automatic parking system, a wade detection system, a system for monitoring people in vehicles, etc.

As shown in Fig. 1, the object detection method 100 according to embodiments of the present disclosure comprises: in step S110, transmitting a transmitted wave by means of the ultrasonic sensor, and determining a reverberation duration. A transmitted wave may be transmitted once by means of the ultrasonic sensor in the ultrasonic sensing system, and a point in time when an output signal of the ultrasonic sensor attenuates to a threshold may be recorded, so that a time period between a point in time when driving of the ultrasonic sensor begins to the point in time when the output signal attenuates to a threshold can be determined as being a reverberation time. In addition, preferably, transmitted waves may be transmitted multiple times by means of the ultrasonic sensor, and the abovementioned reverberation time may be determined multiple times, so as to calculate a statistical value (e.g. average reverberation duration, median value of reverberation duration, etc.) on this basis, and this statistical value may be determined as being the reverberation duration in the sense of the present disclosure. The abovementioned statistical value and reverberation duration may be regarded as being equivalent; the present disclosure does not impose any limitations on the specific way in which the reverberation duration is determined, or the specific way in which it is expressed.

Generally, once the ultrasonic sensing system has been fitted and is in use, a reference reverberation duration of the ultrasonic sensing system can be determined, for example by calibration measurement. The reference reverberation duration is generally related to the characteristics of the ultrasonic sensor itself (e.g. vibrator material, etc.) and the specific fitment of the ultrasonic sensor in the ultrasonic sensing system. In the case of a high-performance ultrasonic sensor, the reference reverberation duration is 0.76800000667572 ms for example. In Fig. 2, a pedestrian (see the dotted line in the figure) and a wall (see the solid line in the figure) were demonstratively used as respective objects under measurement, and reverberation duration sampling was performed 1420 times at each distance value, so as to demonstratively illustrate the relationship between distance and the reverberation duration determined in step S110. As shown in Fig. 2, when the object under measurement is further away (i.e. more than about 20 cm) from the ultrasonic sensing system such that the reflected wave which has returned does not mix with, and is not superposed on, damped vibration which is still in progress, the reverberation duration determined in step S110 essentially remains as the reference reverberation duration (i.e. 0.768000007 ms), and is independent of the distance between the ultrasonic sensing system and the object under measurement at the present time. Furthermore, since the reflected wave will not mix with or be superposed on damped vibration which is still in progress, the time-of-flight (TOF) method can be used for ultrasonic distance measurement. When the object under measurement is nearer (i.e. less than about 20 cm from) the ultrasonic sensing system (i.e. located within a close-range region/blind zone) such that the reflected wave which has returned is able to mix with, and be superposed on, damped vibration which is still in progress, the reverberation duration determined in step S110 will be notably greater than the reference reverberation duration of 0.76800000667572 ms. In other words, by determining whether the reverberation duration determined in step S110 is greater than the reference reverberation duration, a judgment can be made as to whether the object under measurement is located within the close-range region/blind zone of the ultrasonic sensing system. Thus, as shown in Fig. 1, the object detection method 100 according to embodiments of the present disclosure further comprises: in step S120, judging whether the determined reverberation duration is prolonged relative to the reference reverberation duration. If it is prolonged, this means that the object under measurement is located within the close-range region/blind zone of the ultrasonic sensing system. In this case, it will no longer be possible to provide any accurate information on how close the object under measurement is, if the conventional time-of-flight (TOF) method is used. Moreover, if the reverberation duration is measured multiple times, the reverberation duration measured will exhibit randomness.

However, although it is no longer possible to determine the distance between the ultrasonic sensing system and the object under measurement accurately by the time-of-flight (TOF) method, and despite the fact that reverberation durations measured multiple times will exhibit randomness, the degree of dispersion of the reverberation durations measured multiple times can exhibit a certain regularity, so as to provide information on the degree of proximity of the object under measurement. As stated above, the reason for the reverberation duration being prolonged when the object under measurement is located in the close-range region/blind zone is mixing and superposition of the damped vibration of the vibrator of the ultrasonic sensor which is still in progress, and the reflected wave which has returned. The reflected wave which has returned can influence the damped vibration of the ultrasonic sensor vibrator, causing the reverberation duration to exhibit randomness. The closer the object under measurement is to the ultrasonic sensor, the stronger the abovementioned influence of the reflected wave on the ultrasonic sensor vibrator, so the greater the randomness exhibited by the reverberation duration. The degree of dispersion of reverberation durations measured multiple times can be used to represent the abovementioned randomness. In other words, even if the object under measurement is located in the close-range region/blind zone of the ultrasonic sensing system, information on the degree of proximity of the object under measurement can still be provided by determining the degree of dispersion of reverberation durations measured multiple times.

The degree of dispersion of the multiple reverberation durations may be represented as a statistical parameter commonly used in statistics for representing the degree of dispersion of data samples, e.g. the variance or standard deviation of the multiple reverberation durations.

Figs. 3A and 3B further show experimentally the relationship between the degree of dispersion of reverberation durations and the degree of proximity of the object under measurement in the close-range region/blind zone. A wall and a pedestrian were demonstratively chosen as objects under measurement, and sampling was performed 1420 times in each case, so as to experimentally illustrate the abovementioned relationship.

As shown in Fig. 3A, when the object under measurement is for example a wall, the increase in the degree of dispersion is especially obvious when approaching the object under measurement because the wall has a larger reflecting area: when the distance between the object under measurement and the ultrasonic sensing system is greater than 20 cm, the variance of the reverberation durations remains nearly zero; however, when the distance between the object under measurement and the ultrasonic sensing system is less than 20 cm such that the object under measurement is located in the close-range region/blind zone of the ultrasonic sensing system, the variance of the reverberation durations rapidly increases to 1.571252286 from 0 as the distance decreases. As shown in Fig. 3B, when the object under measurement is for example a pedestrian, the increase in the degree of dispersion when approaching the object under measurement is not as dramatic as when the object under measurement is a wall, because the pedestrian has a smaller reflecting area than a wall, but the increase is still obvious: similarly, when the distance between the object under measurement and the ultrasonic sensing system is greater than 20 cm, the variance of the reverberation durations remains nearly zero; however, when the distance between the object under measurement and the ultrasonic sensing system is less than 20 cm such that the object under measurement is located in the close-range region/blind zone of the ultrasonic sensing system, the variance of the reverberation durations rapidly increases to 0.022940899 from 0 as the distance decreases. Thus, information on the degree of proximity of the object under measurement can be provided simply by constructing a parameter capable of reflecting the trend of variation of the degree of dispersion/variance of the reverberation durations.

Therefore, as shown in Fig. 1, if the reverberation duration is prolonged relative to the reference reverberation duration, i.e. if the object under measurement is located in the close-range region/blind zone of the ultrasonic sensing system, the object detection method 100 according to embodiments of the present disclosure is still able to provide information on the degree of proximity of the object under measurement, by means of the abovementioned relationship between the degree of dispersion of reverberation durations and the degree of proximity of the object under measurement in the close-range region/blind zone. That is, the object detection method 100 according to embodiments of the present disclosure can, in step S130, separately determine multiple reverberation durations corresponding to the multiple transmitted waves, so as to determine the degree of dispersion of the multiple reverberation durations, and as stated above, in step S140, judge the degree of proximity to the object according to the trend of variation of the degree of dispersion of the multiple reverberation durations: if the degree of dispersion is increasing, it is judged that the object is being approached; if the degree of dispersion is decreasing, it is judged that the object is being moved away from. The degree of dispersion of the multiple reverberation durations may be represented as a statistical parameter commonly used in statistics for representing the degree of dispersion of data samples, e.g. the variance or standard deviation of the multiple reverberation durations.

In addition, various methods may be used to judge the degree of proximity to the object. Fig. 4 shows a flow chart of a more detailed embodiment of the object detection method 100 according to the present disclosure. As shown in Fig. 4, in the more detailed embodiment of the object detection method 100 according to the present disclosure, said step S130 of determining the degree of dispersion of the multiple reverberation durations may further comprise: if the reverberation duration is prolonged relative to the reference reverberation duration, in sub-step S131, at a first point in time, sequentially transmitting a first plurality of transmitted waves by means of the ultrasonic sensor, separately determining a first plurality of reverberation durations corresponding to the first plurality of transmitted waves, and determining a first degree of dispersion of the first plurality of reverberation durations; and in sub-step S132, at a second point in time after the first point in time, sequentially transmitting a second plurality of transmitted waves by means of the ultrasonic sensor, separately determining a second plurality of reverberation durations corresponding to the second plurality of transmitted waves, and determining a second degree of dispersion of the second plurality of reverberation durations. Furthermore, step S140 of judging the degree of proximity to the object according to the trend of variation of the multiple degrees of dispersion may further comprise: judging the degree of proximity to the object according to the size relationship of the first degree of dispersion and the second degree of dispersion.

Thus, by separately determining and comparing degrees of dispersion of reverberation durations at multiple points in time, e.g. a first point in time and a second point in time, the trend of variation of the degree of dispersion/variance of reverberation durations can be reflected, to provide information on the degree of proximity of the object under measurement in step S140. Specifically, in the more detailed embodiment of the object detection method 100 according to the present disclosure, in step S140, it can be judged that the ultrasonic sensing system is approaching the object if the second degree of dispersion is greater than the first degree of dispersion; and it can be judged that the ultrasonic sensing system is moving away from the object if the second degree of dispersion is less than the first degree of dispersion. As another example, in another embodiment of the object detection method 100 according to the present disclosure, in step S140, it can be judged that the object is being approached if the difference between the second degree of dispersion and the first degree of dispersion is greater than a predetermined threshold; and it can be judged that the object is being moved away from if the difference between the second degree of dispersion and the first degree of dispersion is less than a predetermined threshold. The trend of variation of the degree of dispersion of reverberation durations may be determined in various ways, and the present disclosure imposes no limitations in this respect.

It should also be understood that the specific parameters used in the present disclosure, e.g. 20 cm for judging the close-range region/blind zone, and the reference reverberation duration 0.76800000667572 ms, etc., should not be regarded as limitations on the present disclosure, and are merely specific parameters of the ultrasonic sensing system used in the experiment performed for the purpose of expounding embodiments of the present disclosure.

**In** summary, in the present disclosure, the object detection method 100 can judge whether the object under measurement is located in the close-range region/blind zone of the ultrasonic sensing system, and separately perform measurement in a targeted manner, i.e. can determine the distance between the ultrasonic sensing system and the object under measurement accurately, for example by the time-of-flight (TOF) method, if the object under measurement is not located in the close-range region/blind zone of the ultrasonic sensing system, and can also provide information on the degree of proximity of the object under measurement by means of the relationship between the degree of dispersion of reverberation durations and the degree of proximity of the object under measurement in the close-range region/blind zone, if the object under measurement is too close to the ultrasonic sensing system and thus located within the blind zone of the ultrasonic sensing system. In other words, the object detection method 100 according to the present disclosure can provide information on the position of the object under measurement more comprehensively, thus overcoming the technical bias whereby information on the specific position of the object under measurement cannot be provided if the object under measurement is located in the blind zone of the ultrasonic sensing system, and is especially suitable for close-range detection in the field of motor vehicles.

In addition, according to a second aspect of the present disclosure, a computer program product is proposed, comprising a computer program which, when executed by a processor, causes an object detection device to perform the object detection method according to the present disclosure as described above. For specific features of the computer program product, see the exposition of the object detection method according to the present disclosure above; for conciseness, details are not repeated here.

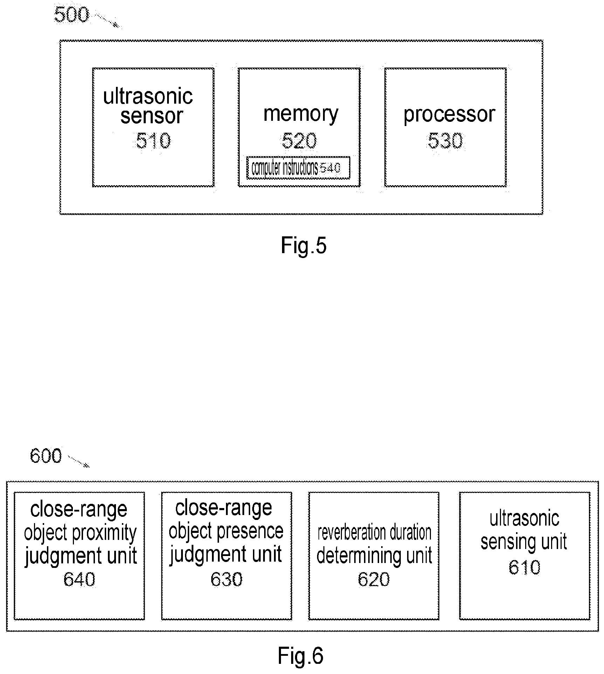

In addition, according to a third aspect of the present disclosure, an object detection device is proposed. Fig. 5 shows a schematic block diagram of an object detection device 500 according to embodiments of the present disclosure. The object detection device 500 comprises an ultrasonic sensor 510, a memory 520, a processor 530, and computer instructions 540 stored on the memory 520, wherein the instructions 540, when executed by the processor 530, cause the object detection device 500 to perform the object detection method according to the present disclosure as described above. For specific features of the object detection device 500, see the exposition of the object detection method according to the present disclosure above; for conciseness, details are not repeated here.

In addition, according to a third aspect of the present disclosure, an object detection device is proposed. Fig. 6 shows a schematic block diagram of an object detection device 600 according to embodiments of the present disclosure. The object detection device 600 comprises: an ultrasonic sensing unit 610; a reverberation duration determining unit 620, configured to determine a reverberation duration after the ultrasonic sensing unit has transmitted a transmitted wave; a close-range object presence judgment unit 630, configured to judge that an object is present within a close range if the reverberation duration is prolonged relative to a reference reverberation duration; and a close-range object proximity judgment unit 640, configured to sequentially transmit multiple transmitted waves by means of the ultrasonic sensing unit 610 if it is judged that an object is present within a close range, separately determine multiple reverberation durations corresponding to the multiple transmitted waves, and determine a degree of dispersion of the multiple reverberation durations, wherein the close-range object proximity judgment unit 640 is further configured to judge the degree of proximity to the object according to a trend of variation of the degree of dispersion of the multiple reverberation durations: if the degree of dispersion is increasing, it is judged that the object is being approached; if the degree of dispersion is decreasing, it is judged that the object is being moved away from.

In addition, in a more detailed embodiment of the object detection device 600 according to the present disclosure, the close-range object proximity judgment unit 640 is further configured to judge the degree of proximity to the object, using the same embodiment as that expounded above in relation to the object detection method 100 according to the present disclosure: if the reverberation duration is prolonged relative to the reference reverberation duration, at a first point in time, sequentially transmitting a first plurality of transmitted waves by means of the ultrasonic sensing unit 610, separately determining a first plurality of reverberation durations corresponding to the first plurality of transmitted waves, and determining a first degree of dispersion of the first plurality of reverberation durations; and at a second point in time after the first point in time, sequentially transmitting a second plurality of transmitted waves by means of the ultrasonic sensing unit 610, separately determining a second plurality of reverberation durations corresponding to the second plurality of transmitted waves, and determining a second degree of dispersion of the second plurality of reverberation durations; and the close-range object proximity judgment unit 640 is further configured to judge that the object is being approached if the second degree of dispersion is greater than the first degree of dispersion, and judge that the object is being moved away from if the second degree of dispersion is less than the first degree of dispersion.

In summary, in the present disclosure, the object detection device 600 has advantages corresponding to those of the object detection method 100 according to the present disclosure. For the specific advantages, see the exposition of the object detection method 100 according to the present disclosure above; for conciseness, details are not repeated here.

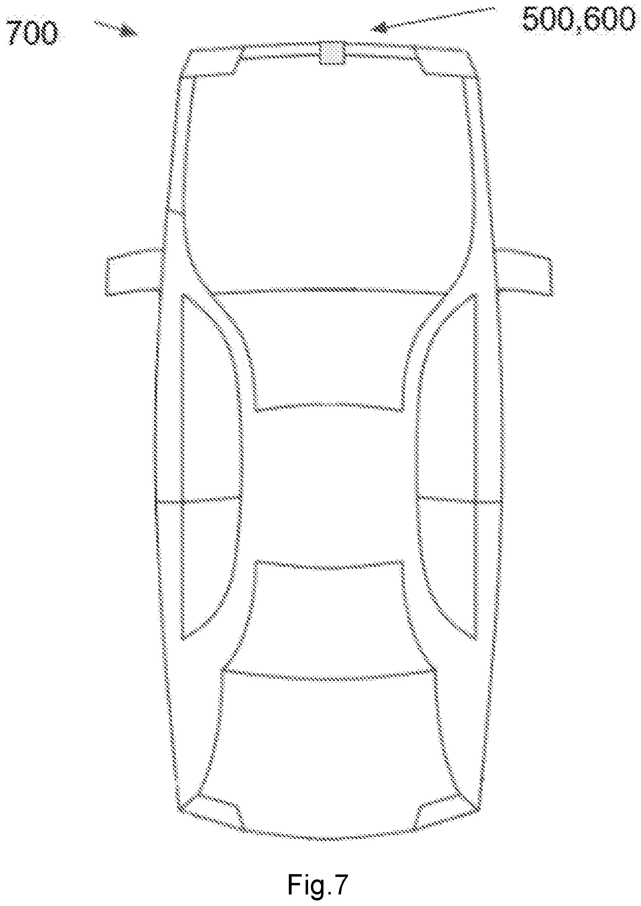

In addition, according to a fourth aspect of the present disclosure, a motor vehicle 700 is proposed. Fig. 7 shows schematically the motor vehicle 700 according to embodiments of the present disclosure. The motor vehicle 700 comprises the object detection device 500, 600 according to embodiments of the present disclosure. The motor vehicle according to the present disclosure may be any vehicle. A preferred motor vehicle is, for example, a road vehicle or a track vehicle. Particularly preferably, the motor vehicle is a road vehicle, such as a passenger vehicle or a truck. The motor vehicle 700 according to the present disclosure has advantages corresponding to those of the object detection device 500, 600 according to the present disclosure; for conciseness, details are not repeated here.

The present disclosure uses specific words to describe embodiments of the present disclosure. For example, "more detailed embodiment" and "more detailed implementation" refer to a particular feature, structure or characteristic relevant to at least one embodiment of the present disclosure. Therefore, it should be stressed and noted that the expression "more detailed embodiment" or "more detailed implementation" mentioned two or more times in different places herein does not necessarily refer to the same embodiment. In addition, certain features, structures or characteristics in one or more embodiments of the present disclosure may be combined appropriately.

Unless otherwise defined, all of the terms (including technical and scientific terms) used herein have the same meanings as those commonly understood by those skilled in the art. It should also be understood that terms such as those defined in a common dictionary should be interpreted as having the same meanings as they have in the context of the related art, rather than being interpreted in an idealized or extremely formalized sense, unless expressly so defined herein.

The above is a description of the present disclosure, and should not be regarded as limiting it. Although some exemplary embodiments of the present disclosure have been described, those skilled in the art will readily understand that many modifications could be made to the exemplary embodiments without departing from the novelty teaching and advantages of the present disclosure. Therefore, all such modifications are intended to be comprised in the scope of the present disclosure as defined by the claims. It should be understood that the above is a description of the present disclosure, and should not be deemed to be limited to the specific embodiments disclosed; in addition, modifications made to the disclosed embodiments and other embodiments are intended to be included within the scope of the attached claims. The present disclosure is defined by the claims and their equivalents.

## Claims

1. An object detection method, the method making use of an ultrasonic sensor and comprising:
transmitting a transmitted wave by means of the ultrasonic sensor, and determining a reverberation duration;
judging whether the determined reverberation duration is prolonged relative to a reference reverberation duration;
if the reverberation duration is prolonged relative to the reference reverberation duration, transmitting multiple transmitted waves sequentially by means of the ultrasonic sensor, separately determining multiple reverberation durations corresponding to the multiple transmitted waves, and determining a degree of dispersion of the multiple reverberation durations;
judging a degree of proximity to the object according to a trend of variation of the degree of dispersion of the multiple reverberation durations: judging that the object is being approached if the degree of dispersion is increasing; and judging that the object is being moved away from if the degree of dispersion is decreasing.

2. The object detection method of claim 1, wherein the determining a degree of dispersion of the multiple reverberation durations further comprises:
if the reverberation duration is prolonged relative to the reference reverberation duration, transmitting a first plurality of transmitted waves sequentially by means of the ultrasonic sensor at a first point in time, separately determining a first plurality of reverberation durations corresponding to the first plurality of transmitted waves, and determining a first degree of dispersion of the first plurality of reverberation durations;
transmitting a second plurality of transmitted waves sequentially by means of the ultrasonic sensor at a second point in time after the first point in time, separately determining a second plurality of reverberation durations corresponding to the second plurality of transmitted waves, and determining a second degree of dispersion of the second plurality of reverberation durations; and
the judging a degree of proximity to the object further comprises:
judging a degree of proximity to the object according to a size relationship of the first degree of dispersion and the second degree of dispersion.

3. The object detection method of claim 2, wherein the judging a degree of proximity to the object further comprises:
judging that the object is being approached if the second degree of dispersion is greater than the first degree of dispersion; and judging that the object is being moved away from if the second degree of dispersion is less than the first degree of dispersion.

4. The object detection method of claim 2, wherein the judging a degree of proximity to the object further comprises:
judging that the object is being approached if the difference between the second degree of dispersion and the first degree of dispersion is greater than a predetermined threshold; and judging that the object is being moved away from if the difference between the second degree of dispersion and the first degree of dispersion is less than a predetermined threshold.

5. The object detection method of claim 1, wherein
the degree of dispersion of the multiple reverberation durations comprises the variance or standard deviation of the multiple reverberation durations.

6. A computer program product comprising a computer program, wherein the computer program, when executed by a processor, causes an object detection device to perform the object detection method of any one of claims 1 - 5.

7. An object detection device, comprising an ultrasonic sensor, a memory, a processor and computer instructions stored on the memory, wherein the instructions, when executed by the processor, cause the object detection device to perform the object detection method of any one of claims 1 - 5.

8. An object detection device, comprising:
an ultrasonic sensing unit;
a reverberation duration determining unit, configured to: determine a reverberation duration after the ultrasonic sensing unit has transmitted a transmitted wave;
a close-range object presence judgment unit, configured to: judge that an object is present within a close range if the reverberation duration is prolonged relative to a reference reverberation duration; and
a close-range object proximity judgment unit, configured to: sequentially transmit multiple transmitted waves by means of the ultrasonic sensing unit if it is judged that an object is present within a close range, separately determine multiple reverberation durations corresponding to the multiple transmitted waves, and determine a degree of dispersion of the multiple reverberation durations;
wherein the close-range object proximity judgment unit is further configured to judge a degree of proximity to the object according to a trend of variation of the degree of dispersion of the multiple reverberation durations: judging that the object is being approached if the degree of dispersion is increasing; and judging that the object is being moved away from if the degree of dispersion is decreasing.

9. The object detection device of claim 8, wherein the close-range object proximity judgment unit is further configured to:
if the reverberation duration is prolonged relative to the reference reverberation duration, transmit a first plurality of transmitted waves sequentially by means of the ultrasonic sensing unit at a first point in time, separately determine a first plurality of reverberation durations corresponding to the first plurality of transmitted waves, and determine a first degree of dispersion of the first plurality of reverberation durations; and
transmit a second plurality of transmitted waves sequentially by means of the ultrasonic sensing unit at a second point in time after the first point in time, separately determine a second plurality of reverberation durations corresponding to the second plurality of transmitted waves, and determine a second degree of dispersion of the second plurality of reverberation durations;
and the close-range object proximity judgment unit is further configured to:
judge that the object is being approached if the second degree of dispersion is greater than the first degree of dispersion; and judge that the object is being moved away from if the second degree of dispersion is less than the first degree of dispersion.

10. A motor vehicle, comprising the object detection device of claims 7 - 9.
